# EUROPEAN PATENT APPLICATION

(11) **EP 4 414 892 A1**
(43) Date of publication of application: **14.08.2024**
(21) Application number: 23220581.5
(22) Date of filing: 28.12.2023
(51) Int. Cl.: G06N 3/04, G06F 8/41

(54) **INSTRUCTION GENERATION METHOD AND APPARATUS FOR NEURAL NETWORK ACCELERATOR, AND ELECTRONIC DEVICE**

(30) Priority: 10.02.2023 CN 202310099691
(71) Applicant: Shanghai Horizon Intelligent Automotive Technology Co., Ltd., Shanghai Jiading District 201800 (CN)
(72) Inventor: SHEN, Junzhi, Shanghai, 201800 (CN); LI, Delin, Shanghai, 201800 (CN)
(74) Representative: Dehns Germany Partnerschaft mbB

(57) **Abstract**

An instruction generation method and apparatus for a neural network accelerator, and an electronic device are disclosed. The method includes: determining a plurality pieces of first spatial information corresponding to a neural network model, which represents at least one neural network layer in the model; searching a cache for a policy mapping relationship including a plurality pieces of target spatial information and target policy information respectively corresponding to the target spatial information which includes the at least one piece of first spatial information, based on the first spatial information, to obtain first policy information respectively corresponding to at least one piece of the first spatial information; and determining an overall optimization policy corresponding to the model based on a dynamic programming algorithm and a plurality pieces of policy information, to generate executable instructions for the accelerator, whereby reducing duration of compiling and optimizing the model for a compiler.

## Description

### FIELD OF THE INVENTION

This disclosure relates to the field of neural network technologies, and in particular, to an instruction generation method and apparatus for a neural network accelerator, and an electronic device.

### BACKGROUND OF THE INVENTION

A neural network compiler is configured to generate an executable instruction sequence for a hardware device (such as a neural network accelerator) based on a neural network model. With increasingly growing scale and an increasingly more complex structure of the neural network model, there are more manners for compiling the neural network model. During a compilation process, the neural network compiler may determine an optimal compilation manner among various compilation manners, so that the hardware device can efficiently execute an algorithm of the neural network model.

When the neural network compiler compiles and optimizes the neural network model, because there are a lot of compilation manners for the neural network model, it takes relatively long time to determine the optimal compilation manner among these compilation manners, which affects user experience of using the neural network compiler.

### SUMMARY OF THE INVENTION

It takes relatively long time for an existing neural network compiler to compile and optimize a neural network model.

To resolve the foregoing technical problem, this disclosure is proposed. Embodiments of this disclosure provide an instruction generation method and apparatus, and an electronic device. When generating an executable instruction sequence for a neural network accelerator, a plurality pieces of first spatial information corresponding to a neural network model is fully considered, and a plurality pieces of first policy information corresponding to the plurality pieces of first spatial information is determined quickly by using a policy mapping relationship in a cache, so that duration of compiling and optimizing the neural network model is reduced for the neural network compiler.

According to an aspect of this disclosure, an instruction generation method for a neural network accelerator is provided, including: firstly, determining a plurality pieces of first spatial information corresponding to a neural network model, wherein the first spatial information is used to represent at least one neural network layer in the neural network model; subsequently, searching a cache for a policy mapping relationship based on the first spatial information, to obtain first policy information respectively corresponding to at least one piece of the first spatial information, wherein the policy mapping relationship includes a plurality pieces of target spatial information and target policy information respectively corresponding to the target spatial information, and the plurality pieces of target spatial information includes the at least one piece of first spatial information; and finally, determining an overall optimization policy corresponding to the neural network model based on a dynamic programming algorithm and a plurality pieces of policy information, to generate executable instructions for the neural network accelerator, wherein the plurality pieces of policy information includes the first policy information respectively corresponding to the at least one piece of first spatial information.

Based on this solution, the policy mapping relationship is preset, which is equivalent to that a database is preset. Optimization policies (that is, the target policy information) corresponding to a plurality of spaces (that is, the target spatial information) are cached in the database. When a new neural network model needs to be compiled and optimized, the neural network model is first split into a plurality of spaces (that is, the first spatial information), and then the optimization policies corresponding to the plurality of spaces are searched in the database (that is, the policy mapping relationship). If the optimization policies may be found, there is no need to calculate the optimization policy corresponding to the space. In this way, duration of compilation and optimization may be directly reduced for the neural network compiler.

According to another aspect of this disclosure, an instruction generation apparatus for a neural network accelerator is provided, including: a division module, configured to determine a plurality pieces of first spatial information corresponding to a neural network model, wherein the first spatial information is used to represent at least one neural network layer in the neural network model;
a searching module, configured to search a cache for a policy mapping relationship based on the first spatial information, to obtain first policy information respectively corresponding to at least one piece of the first spatial information, wherein the policy mapping relationship includes a plurality pieces of target spatial information and target policy information respectively corresponding to the target spatial information, and the plurality pieces of target spatial information includes the at least one piece of first spatial information; and
a generation module, configured to determine an overall optimization policy corresponding to the neural network model based on a dynamic programming algorithm and a plurality pieces of policy information, to generate executable instructions for the neural network accelerator, wherein the plurality pieces of policy information include the first policy information respectively corresponding to the at least one piece of first spatial information.

According to an aspect of this disclosure, a computer readable storage medium is provided, wherein the storage medium stores a computer program, and the computer program is used for implementing any method described above.

According to an aspect of this disclosure, an electronic device is provided, wherein the electronic device includes: a processor, and a memory configured to store processor-executable instructions, wherein the processor is configured to read the executable instructions from the memory, and execute the instructions to implement any method described above.

### BRIEF DESCRIPTION OF THE DRAWINGS

FIG 1 is a diagram of an exemplary structure of a system to which this disclosure is applicable;
FIG 2 is a schematic diagram of a structure of an electronic device according to an exemplary embodiment of this disclosure;
FIG 3 is a schematic diagram of a structure of another electronic device according to an exemplary embodiment of this disclosure;
FIG 4 is a schematic flowchart 1 of an instruction generation method for a neural network accelerator according to an exemplary embodiment of this disclosure;
FIG 5 is a schematic diagram of a structure of a neural network model according to an exemplary embodiment of this disclosure;
FIG 6 is a schematic flowchart 2 of an instruction generation method for a neural network accelerator according to an exemplary embodiment of this disclosure;
FIG 7 is a schematic flowchart 3 of an instruction generation method for a neural network accelerator according to an exemplary embodiment of this disclosure;
FIG 8 is a schematic flowchart 4 of an instruction generation method for a neural network accelerator according to an exemplary embodiment of this disclosure;
FIG 9 is a schematic flowchart 5 of an instruction generation method for a neural network accelerator according to an exemplary embodiment of this disclosure;
FIG 10 is a schematic flowchart 6 of an instruction generation method for a neural network accelerator according to an exemplary embodiment of this disclosure;
FIG 11 is a schematic flowchart 6 of an instruction generation method for a neural network accelerator according to an exemplary embodiment of this disclosure;
FIG 12 is a schematic flowchart 6 of an instruction generation method for a neural network accelerator according to an exemplary embodiment of this disclosure;
FIG 13 is a diagram of a structure of an instruction generation apparatus according to an exemplary embodiment of this disclosure; and
FIG 14 is a diagram of a structure of an electronic device according to an exemplary embodiment of this disclosure.

### DETAILED DESCRIPTION OF THE EMBODIMENTS

Exemplary embodiments of this disclosure are described below in detail with reference to the accompanying drawings. Obviously, the described embodiments are merely a part, rather than all of embodiments of this disclosure. It should be understood that this disclosure is not limited by the exemplary embodiments described herein.

A neural network compiler is configured to compile and optimize a neural network model, so that the neural network model runs on a hardware device efficiently. Most neural network models are described by using high-level programming language source code (such as a Java language or a python language). The neural network compiler may compile and optimize execution logic of the high-level programming language source code to generate machine code that can run on the hardware device efficiently.

The neural network compiler compiles and optimizes the neural network model specifically as follows: the neural network compiler traverses all neural network layers of the neural network model, divides all the neural network layers to obtain a plurality of division results (which may also be referred to as layered spaces), then determines an optimization policy corresponding to each division result, and finally, obtains a compilation optimization result of the neural network model based on the optimization policy corresponding to each division result.

With increasingly growing scale and an increasingly more complex structure of the neural network model, there are also more neural network layers in the neural network model. Correspondingly, the division results obtained by dividing the neural network layers are also increasing exponentially. Because the optimization policy corresponding to each division result is obtained through calculation, more division results indicate more optimization policies that need to be determined by the neural network compiler. In this way, a significant amount of time consumption may be inevitably resulted in, and user experience for the neural network compiler may also be affected.

Regarding such situation, usually, division results may be reduced through human intervention. For example, some division results are deleted through manual pruning. In this way, a process of determining an optimization policy corresponding to the deleted division result is saved, thereby reducing duration of compilation and optimization for the neural network compiler. However, compared with the optimization policy corresponding to the division result that is not deleted, the optimization policies corresponding to the division results that are deleted through manual pruning may have a higher matching degree with a scenario to which the neural network model is applied. In this case, a compilation and optimization result obtained by using the optimization policy corresponding to the division result that is not deleted may be relatively poor, and ideal effects cannot be achieved.

Therefore, to resolve the problem of long duration for compilation and optimization, an embodiment of this disclosure provides an instruction generation method for a neural network accelerator. According to the method, a neural network model is firstly split into a plurality pieces of first spatial information. Subsequently, a policy mapping relationship is searched for policy information corresponding to the plurality pieces of first spatial information. Finally, an overall optimization policy corresponding to the neural network model, that is, a compilation and optimization result of the neural network model, is determined by using the policy information and a dynamic programming algorithm. Scale of the neural network model is usually very large, and optimization policies (that is, target policy information) corresponding to a plurality of spaces (that is, target spatial information) may be pre-stored through the policy mapping relationship. In this way, when the first spatial information is the same as the target spatial information, the target policy information corresponding to the target spatial information may be directly used as first policy information corresponding to the first spatial information, so that a process of determining the first policy information is saved, thereby reducing time of compilation and optimization for the neural network compiler.

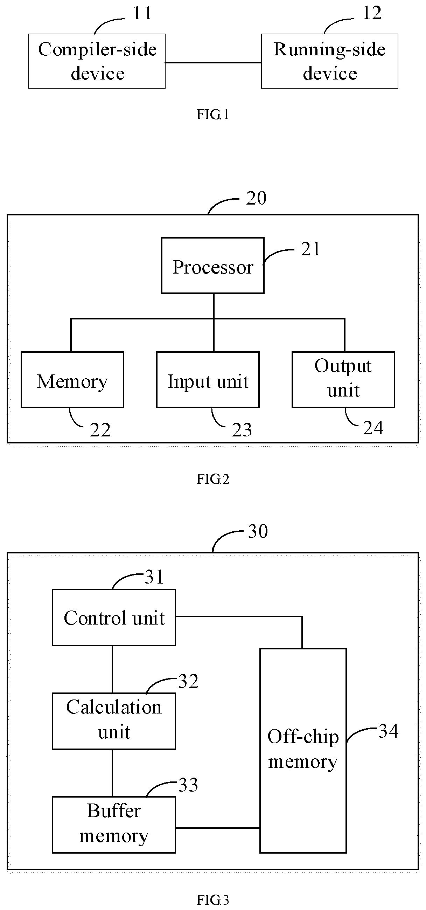

FIG 1 shows an instruction generation system according to an embodiment of this disclosure. The system includes a compiler-side device 11 and a running-side device 12. The compiler-side device 11 is configured to generate compilation instructions corresponding to the neural network model. The running-side device 12 is configured to run the compilation instructions provided by the compiler-side device 11 so as to perform operations of the neural network model. These operations include, but are not limited to: a convolution operation, a pooling operation, and an activation function operation.

In some embodiments, the compiler-side device 11 may be implemented by using an electronic device 20. The electronic device 20 may include, but is not limited to, a personal computer, a server computer, a multi-processor system, and a microprocessor-based system.

In some embodiments, the running-side device 12 may be implemented by using an electronic device 30. The electronic device 30 may include, but is not limited to, a neural network accelerator or a neural network chip.

FIG 2 is a schematic diagram of a structure of an electronic device 20 according to an embodiment of this disclosure. As shown in FIG 2, the electronic device 20 includes at least one processor 21 and a memory 22.

The processor 21 is configured to implement the instruction generation method for a neural network accelerator according to the embodiments of this disclosure. The processor 21 may be a high-performance central processing unit (CPU), a graphics processing unit (GPU), or other processors that support instruction sequence compilation for a neural network, or other forms of processing units having a compilation processing capability and/or an instruction execution capability.

The memory 22 may include one or more computer program products. The computer program products may include various forms of computer readable storage media, such as a volatile memory and/or a non-volatile memory. The volatile memory may include, for example, a random-access memory (RAM) and/or a cache. The nonvolatile memory may include, for example, a read-only memory (ROM), a hard disk, and a flash memory. One or more computer program instructions may be stored on the computer readable storage medium. The processor 21 may execute program instructions to implement an nstruction generation method for a neural network accelerator that is described below.

In some embodiments, as shown in FIG 2, the electronic device 20 may further include an input unit 23 and an output unit 24. The input unit 23 may include, for example, a keyboard and a mouse, for a compiler to input parameters of the neural network, such as instruction sequences of a plurality of PEs. The output unit 24 may include, for example, a display, a speaker, a printer, a communication network, and a remote output unit connected by the communication network, for the compiler to view a final compilation result or intermediate data during a compilation process.

It should be noted that a specific structure of the electronic device 20 is not limited in the embodiments of this disclosure. The electronic device 20 may include more or fewer components than those shown in FIG 2. For example, the electronic device 20 may further include a bus, an input/output interface, and other components.

FIG 3 is a schematic diagram of a structure of an electronic device 30 according to an embodiment of this disclosure. As shown in FIG 3, the electronic device 30 may include a control unit 31 and a calculation unit 32. The control unit 31 is configured to execute instructions to control the calculation unit 32 to implement the instruction generation methods for a neural network accelerator that are described below.

The control unit 31 may include one or more processors or other forms of processing units having a neural network operation capability and/or an instruction execution capability. The processor may include, but is not limited to, a GPU, a brain processing unit (BPU), a tensor processing unit (TPU), and other processors that support neural network-related calculations. In some embodiments, the control unit 31 is configured to control the calculation unit 32 to perform corresponding operations based on instructions (such as convolution operation instructions, pooling operation instructions, and activation function operation instructions) of the neural network accelerator.

The calculation unit 32 includes an operation circuit that may be configured to perform an operation of the neural network. The operation includes, but is not limited to, any one or more operations of a convolution operation, a pooling operation, and an activation function operation.

In some embodiments, the electronic device 30 may further include a buffer memory 33 and an off-chip memory 34. The buffer memory 33 may include one or more independent cache memories or a processing unit having a data caching capability, and may access the off-chip memory 34 under control of the control unit 31. In some embodiments, the buffer memory 31 may be a static access memory with a fast speed and small capacity, such as a static random access memory (SRAM). For example, the buffer memory 33 may be configured to receive at least a part of input feature data from the off-chip memory 34 and/or data of a convolution kernel, and cache the data for use by the calculation unit 32; and the buffer memory 33 may also be configured to receive and cache output feature data output by the calculation unit 32, and output the output feature data to the off-chip memory 34.

The off-chip memory 34 may include one or more independent memories or a processing unit having a data storage capability, and may be accessed by the buffer memory 33 under control of the control unit 31. In some embodiments, the off-chip memory 34 may be a dynamic access memory with a slow speed and large capacity, such as a dynamic random access memory (DRAM). In some embodiments, the off-chip memory 34 has a double data rate (DDR).

It should be noted that a specific structure of the electronic device 30 is not limited in the embodiments of this disclosure. The electronic device 30 may include more or fewer components than those shown in FIG 3. For example, the electronic device 30 may further include a bus and other components.

The method in the following embodiments of this disclosure may be applied to many fields that require neural network calculations, such as image processing and intelligent driving. For example, by implementing the method provided in the embodiments of this disclosure, image data may be processed in the field of image processing.

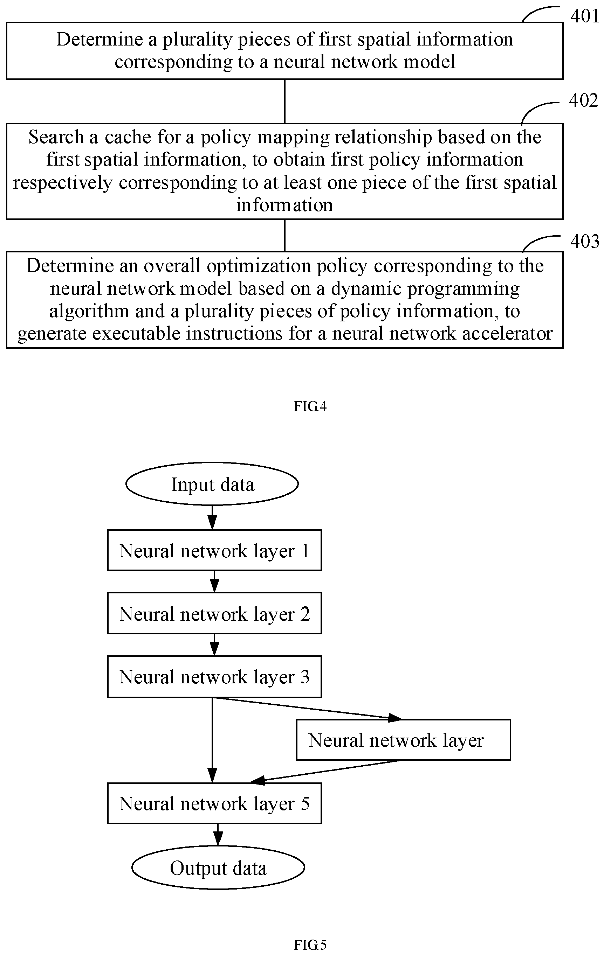

FIG 4 shows an instruction generation method for a neural network accelerator according to an embodiment of this disclosure. The method may be applied to a compiler-side device. As shown in FIG 4, the method includes the following steps 401 to 403.

Step 401. Determine a plurality pieces of first spatial information corresponding to a neural network model.

The first spatial information is used to represent at least one neural network layer in the neural network model.

In some embodiments, the neural network model may be a model applied in fields such as natural language processing, computer vision, speech recognition, and image processing. Application scenarios of the neural network model are not limited in this application.

The neural network model includes a plurality of neural network layers. For example, the neural network model includes more than 500 neural network layers. A quantity of layers of the neural network model is not limited in this application, but is subject to actual application. FIG 5 exemplarily shows a neural network model 50. The neural network model 50 includes a neural network layer 1, a neural network layer 2, a neural network layer 3, a neural network layer 4, and a neural network layer 5. A plurality of layered spaces corresponding to the neural network model may be obtained by dividing the plurality of neural network layers in the neural network model. A plurality pieces of first spatial information may be obtained by processing the plurality of layered spaces, respectively. The plurality pieces of first spatial information respectively include the neural network layers and data information about the neural network layers.

The data information about the neural network layers includes operation types corresponding to the neural network layers, a data size of input data, hyperparameters, and the like. The operation types corresponding to the neural network layers include, but are not limited to, any one or more operations of a convolution operation, a pooling operation, and an activation function operation.

The input data of the neural network layer may be image data or text data. This is not limited in this application. For example, the input data of the neural network layer is image data, and a data size of the image data is H*W*C, where H refers to a length of an image, W refers to a width of the image, and C refers to a quantity of channels in the image. Generally, a quantity of channels in a gray-scale image is 1, and a quantity of channels in a color image is 3.

The operation types corresponding to different neural network layers may be the same or different. For example, if the operation types corresponding to different neural network layers are different, the hyperparameters corresponding to said different neural network layers are also different. For example, when the neural network layer is a convolution layer, the corresponding hyperparameters include sizes of convolution kernels, a quantity of convolution kernels, a convolution step, and a quantity of zero padding. For another example, when the neural network layer is a pooling layer, the corresponding hyperparameters include a size of a pooling kernel, a pooling step, and a quantity of zero padding.

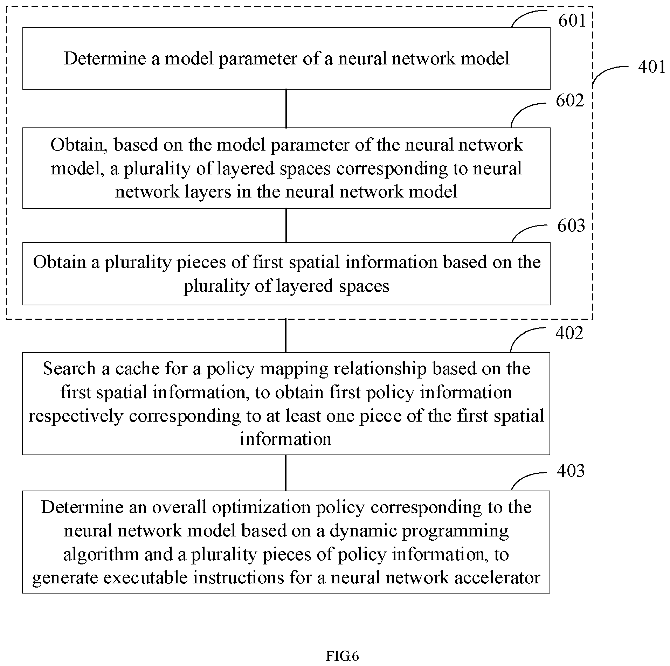

In some embodiments, as shown in FIG 6, on the basis of the embodiment shown in FIG 4, step 401 includes steps 601 to 603.

Step 601. Determine a model parameter of the neural network model.

The model parameter includes a quantity of the neural network layers, and/or an input/output type of the neural network layer. In some embodiments, the input/output type of the neural network layer includes at least one of single-input single-output, single-input dual-output, and dual-input dual-output.

Most neural network models are described by using high-level language source codes. The high-level language source codes may be converted to obtain an optimization space corresponding to the neural network model. The model parameter of the neural network model may be determined more intuitively through the optimization space.

The high-level language source codes may be converted by inputting the high-level language source codes into model visualization software (such as Netron). The model visualization software outputs the optimization space corresponding to the neural network model. For example, the model visualization software outputs a directed acyclic graph (DAG) shown in FIG 5. The DAG is an optimization space. The neural network model is described by using the DAG in a form of a graph structure. The neural network model is abstracted as nodes and directed edges in the DAG The nodes represent neural network layers (that is, the neural network layer 1, the neural network layer 2, the neural network layer 3, the neural network layer 4, and the neural network layer 5) in the neural network model. The directed edges represent input data corresponding to the neural network layers.

The high-level language source codes may also be converted by analyzing statements in the high-level language source codes, to extract a plurality of neural network layers in the neural network model and input data corresponding to the plurality of neural network layers. Subsequently, a computational instruction sequence is generated based on the plurality of neural network layers and the input data corresponding to the plurality of neural network layers that are extracted. The computational instruction sequence is an optimization space.

The model parameter of the neural network model may be described more vividly based on the optimization space. For example, FIG 5 shows the optimization space described by using the DAG The optimization space indicates that the neural network model 50 includes 5 neural network layers, which respectively are the neural network layer 1, the neural network layer 2, the neural network layer 3, the neural network layer 4, and the neural network layer 5. An input/output type of the neural network layer 1 is single-input single-output. An input/output type of the neural network layer 2 is also single-input single-output. An input/output type of the neural network layer 3 is single-input dual-output. An input/output type of the neural network layer 4 is single-input single-output. An input/output type of the neural network layer 5 is dual-input single-output.

It should be noted that the input/output type of the neural network layer is mainly related to the neural network layer in the neural network model. An input/output type of the neural network model may also be triple-input triple-output or quad-input triple-output. This is not limited in this application.

Step 602. Obtain, based on the model parameter of the neural network model, a plurality of layered spaces corresponding to the neural network layers in the neural network model.

The neural network layers in the neural network model are divided based on the model parameter of the neural network model, to obtain a plurality of layered spaces. Each layered space includes at least one neural network layer. For example, the neural network layers in the neural network model may be divided according to a preset rule. The preset rule may be related to a quantity of the neural network layers, the input/output types of the neural network layers, or may be related to both the quantity of the neural network layers and the input/output types of the neural network layers. The preset rule is not limited in this application.

For example, the preset rule is to divide every two neural network layers to obtain a plurality of layered spaces. With reference to FIG 5, after division, there are 5 layered spaces, which respectively are a layered space a (the neural network layer 1 and the neural network layer 2), a layered space b (the neural network layer 2 and the neural network layer 3), a layered space c (the neural network layer 3 and the neural network layer 4), a layered space d (the neural network layer 4 and the neural network layer 5), and a layered space e (the neural network layer 3 and the neural network layer 5).

Alternatively, the preset rule is to divide every three neural network layers to obtain a plurality of layered spaces. With reference to FIG 5, after division, there are 4 layered spaces, which respectively are a layered space f (the neural network layer 1 to the neural network layer 3), a layered space g (the neural network layer 2 to the neural network layer 4), a layered space h (the neural network layer 3 to the neural network layer 5), and a layered space i (the neural network layer 2, the neural network layer 3, and the neural network layer 5).

Alternatively, the preset rule is to divide according to the input/output type of the neural network layers, to obtain a plurality of layered spaces. With reference to FIG 5, after division, there are 4 layered spaces, which respectively are a layered space h (the neural network layer 1 and the neural network layer 2), a layered space 1 (the neural network layer 3), a layered space j (the neural network layer 4), and a layered space k (the neural network layer 5). The input/output type of the neural network layer 1 and the neural network layer 2 is single-input single-output. The input/output type of the neural network layer 3 is single-input dual-output. The input/output type of the neural network layer 4 is single-input single-output. The input/output type of the neural network layer 5 is dual-input single-output. Although the input/output type of the neural network layer 4 is the same as that of the neural network layer 1 and the neural network layer 2, input data of the neural network layer 4 depends on output data of the neural network layer 3. Therefore, the neural network layer 4 cannot be divided into the layered space 1, but needs to be separately divided into the layered space 3.

Taking the neural network model 50 shown in FIG 5 as an example, the neural network model 50 may be divided into a plurality of layered spaces. Detailed content of the plurality of layered spaces is shown in Table 1.

**Table 1**

| Quantity of divided layers | Division result | | | | |
|---|---|---|---|---|---|
| 1 | Layered space 1 (neural network layer 1) | Layered space 2 (neural network layer 2) | Layered space 3 (neural network layer 3) | Layered space 4 (neural network layer 4) | Layered space 5 (neural network layer 5) |
| 2 | Layered space 6 (neural network layers 1 and 2) | Layered space 7 (neural network layers 2 and 3) | Layered space 8 (neural network layers 3 and 4) | Layered space 9 (neural network layers 4 and 5) | Layered space 10 (neural network layers 3 and 5) |
| 3 | Layered space 11 (neural network layers 1 to 3) | Layered space 12 (neural network layers 2 to 4) | Layered space 13 (neural network layers 3 to 5) | Layered space 14 (neural network layers 2, 3, and 5) | / |
| 4 | Layered space 15 (neural network layers 1 to 4) | Layered space 16 (neural network layers 2 to 5) | Layered space 17 (neural network layers 1, 3, and 5) | / | / |
| 5 | Layered space 18 (neural network layers 1 to 5) | / | / | / | / |

It may be learned from Table 1 that, the neural network model 50 may be divided into 18 layered spaces, which respectively are: the layered space 1, the layered space 2, the layered space 3, the layered space 4, the layered space 5, the layered space 6, the layered space 7, the layered space 8, the layered space 9, the layered space 10, the layered space 11, the layered space 12, the layered space 13, the layered space 14, the layered space 15, the layered space 16, the layered space 17, and the layered space 18.

The layered space 1 is composed of the neural network layer 1. The layered space 2 is composed of the neural network layer 2. The layered space 3 is composed of the neural network layer 3. The layered space 4 is composed of the neural network layer 4. The layered space 5 is composed of the neural network layer 5. The layered space 6 is composed of the neural network layers 1 and 2 (which specifically include the neural network layer 1 and the neural network layer 2). The layered space 7 is composed of the neural network layers 2 and 3 (which specifically include the neural network layer 2 and the neural network layer 3). The layered space 8 is composed of the neural network layers 3 and 4 (which specifically include the neural network layer 3 and the neural network layer 4). The layered space 9 is composed of the neural network layers 4 and 5 (which specifically include the neural network layer 4 and the neural network layer 5). The layered space 10 is composed of the neural network layers 3 and 5 (which specifically include the neural network layer 3 and the neural network layer 5). The layered space 11 is composed of the neural network layers 1 to 3 (which specifically include the neural network layer 1, the neural network layer 2, and the neural network layer 3). The layered space 12 is composed of the neural network layers 2 to 4 (which specifically include the neural network layer 2, the neural network layer 3, and the neural network layer 4). The layered space 13 is composed of the neural network layers 3 to 5 (which specifically include the neural network layer 3, the neural network layer 4, and the neural network layer 5). The layered space 14 is composed of the neural network layers 2, 3, and 5 (which specifically include the neural network layer 2, the neural network layer 3, and the neural network layer 5). The layered space 15 is composed of the neural network layers 1 to 4 (which specifically include the neural network layer 1, the neural network layer 2, the neural network layer 3, and the neural network layer 4). The layered space 16 is composed of the neural network layers 2 to 5 (which specifically include the neural network layer 2, the neural network layer 3, the neural network layer 4, and the neural network layer 5). The layered space 17 is composed of the neural network layers 1 to 3, and 5 (which specifically include the neural network layer 1, the neural network layer 2, the neural network layer 3, and the neural network layer 5). The layered space 18 is composed of the neural network layers 1 to 5 (which specifically include the neural network layer 1, the neural network layer 2, the neural network layer 3, the neural network layer 4, and the neural network layer 5).

Step 603. Obtain a plurality pieces of first spatial information based on the plurality of layered spaces.

In some embodiments, that obtaining the plurality pieces of first spatial information based on the plurality of layered spaces is specifically performed by encoding based on the plurality of layered spaces. The plurality of layered spaces are in one-to-one correspondence to the plurality pieces of first spatial information.

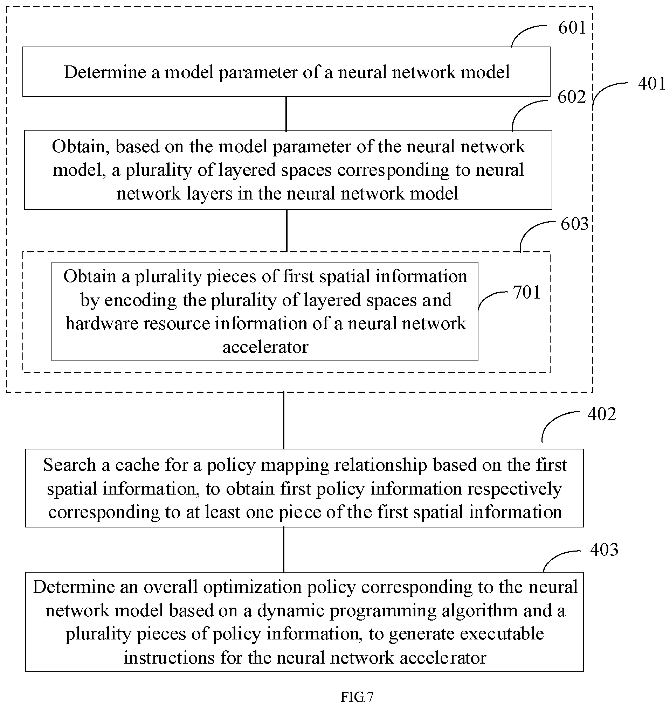

In some embodiments, as shown in FIG 7, on the basis of the embodiment shown in FIG 4, step 603 includes step 701.

Step 701. Obtain the plurality pieces of first spatial information by encoding the plurality of layered spaces and hardware resource information of a neural network accelerator.

Since the neural network model optimized and compiled by the neural network encoder is implemented on a hardware device, after obtaining a plurality of layered spaces corresponding to the neural network model, the hardware device on which the neural network model runs also needs to be considered. Therefore, after the hardware device on which the neural network model runs is determined, the plurality of layered spaces corresponding to the neural network model and hardware resource information of the hardware device are combined for encoding. For example, if it is determined that the neural network model runs on the neural network accelerator, each layered space in the plurality of layered spaces and the hardware resource information of the neural network accelerator may be encoded separately.

In some embodiments, that the first spatial information is obtained by encoding the plurality of layered spaces and the hardware resource information of the neural network accelerator is that the plurality pieces of first spatial information are obtained by encoding the plurality of layered spaces and hardware resource information of a neural network accelerator based on a hash algorithm. The first spatial information which has been encoded may be represented by using a plurality of key values. The plurality of key values are in one-to-one correspondence to the plurality of layered spaces, and the plurality of layered spaces and the neural network accelerator are uniquely identified by using the plurality of key values.

In addition, during the encoding process, there may be a plurality of mapping relationships that are stored in a processor. The mapping relationships are used to indicate one piece of the first spatial information, the layered space corresponding to the first spatial information, and the hardware resource information of the neural network accelerator. The layered spaces stored by the plurality of mapping relationships are different. The first spatial information also stored by the plurality of mapping relationships is different.

Each layered space in the plurality of layered spaces and the hardware resource information of the neural network accelerator may be encoded separately by using other algorithms, provided that a unique identifier for representing the layered space and the neural network accelerator is obtained. An encoding algorithm for the layered space and the neural network accelerator is not limited in this disclosure. Compared with the layered space and the hardware resource information of the neural network accelerator before encoding, the first spatial information after the encoding takes up less storage space. Moreover, compared to performing data processing by using the layered space and the hardware resource information of the neural network accelerator before the encoding, performing data processing by using the plurality pieces of first spatial information after the encoding requires fewer data resources, and fewer hardware resources are required to process the data resources. Therefore, consumption of the hardware resources may be reduced to some extent by means of encoding.

Step 402. Search a cache for a policy mapping relationship based on the first spatial information, to obtain first policy information respectively corresponding to at least one piece of first spatial information.

The policy mapping relationship includes a plurality pieces of target spatial information and target policy information respectively corresponding to the target spatial information, and the plurality pieces of target spatial information includes the at least one piece of first spatial information.

As the scale of the neural network model increases (that is, there are more neural network layers), it may be learned from steps 601 to 701 that the layered spaces corresponding to the neural network model are more and more, and the first spatial information corresponding to the layered space is more and more too. Subsequently, the first policy information corresponding to each piece of first spatial information is determined separately, and finally, an overall optimization policy corresponding to the neural network model is obtained based on a plurality pieces of first policy information. The first policy information for a plurality pieces of first spatial information can be obtained through calculation only. Therefore, when there is more first spatial information, correspondingly, more first policy information corresponding to the first spatial information needs to be determined. In this case, computational quantity may be increased significantly, and calculation may also take longer.

Therefore, in this disclosure, the process of determining the first policy information corresponding to the first spatial information is reduced by using the policy mapping relationship, so that time consumption and hardware resource consumption are reduced. For example, a large amount of target spatial information and the target policy information corresponding to each piece of target spatial information are pre-stored in the policy mapping relationship. The target spatial information is stored in a form of key values, and the target policy information corresponding to the target spatial information is stored in a form of "value" values. After a plurality pieces of first spatial information corresponding to the neural network model is determined, because the plurality pieces of first spatial information is also recorded in the form of key values, the key values corresponding to the plurality pieces of first spatial information may be directly compared with the key values corresponding to the plurality pieces of target spatial information in the policy mapping relationship. Through comparison, the target spatial information consistent with the first spatial information is determined from the plurality pieces of target spatial information, and then the target policy information corresponding to the target spatial information is taken as the first policy information corresponding to the first spatial information. In this way, regarding the first spatial information consistent with the target spatial information, there is no need to determine the first policy information corresponding to the first spatial information again, but the first policy information is used directly, thereby reducing duration of compilation and optimization.

Step 403. Determine an overall optimization policy corresponding to the neural network model based on a dynamic programming algorithm and a plurality pieces of policy information, to generate executable instructions for the neural network accelerator.

The plurality pieces of policy information include the first policy information respectively corresponding to the at least one piece of first spatial information.

The dynamic programming algorithm is to analyze the plurality pieces of policy information to determine, from the plurality pieces of policy information, a policy having a higher matching degree with a scenario to which the neural network model is applied; take this policy as the overall optimization policy corresponding to the neural network model; and finally, generate the executable instructions for the neural network accelerator based on the overall optimization policy.

For example, the scenario to which the neural network model is applied requires the neural network model to be able to output data in a short period of time. In this case, the dynamic programming algorithm is to analyze the plurality pieces of policy information, to identify a policy with shortest time consumption from the plurality pieces of policy information to serve as the overall optimization policy. For another example, the scenario to which the neural network model is applied requires the neural network model to occupy as few memory access bandwidth resources as possible at the same time. In this case, the dynamic programming algorithm is to analyze the plurality pieces of policy information, to identify a policy occupying least memory access bandwidth resources from the plurality pieces of policy information to serve as the overall optimization policy.

Based on this solution, the policy mapping relationship is preset, which is equivalent to that a database is preset. Optimization policies (that is, the target policy information) corresponding to a plurality of spaces (that is, the target spatial information) is cached in the database. When a new neural network model needs to be compiled and optimized, the neural network model is firstly split into a plurality of spaces (that is, the first spatial information), and then the optimization policies corresponding to the plurality of spaces are searched in the database (that is, the policy mapping relationship). If the optimization policies may be found, there is no need to calculate the optimization policy corresponding to the space. In this way, duration of compilation and optimization may be directly reduced for the neural network compiler.

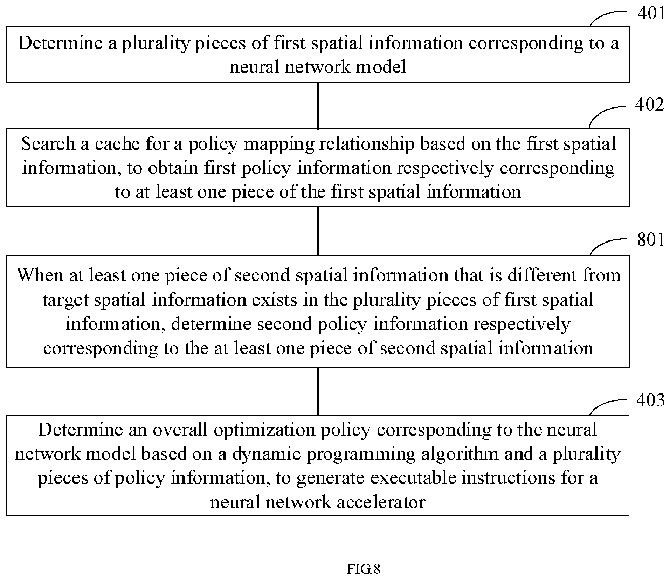

In some embodiments, as shown in FIG 8, on the basis of the embodiment shown in FIG 4, the method further includes:
Step 801. When at least one piece of second spatial information that is different from the target spatial information exists in the plurality pieces of first spatial information, determine second policy information respectively corresponding to the at least one piece of second spatial information.

The plurality pieces of policy information include the second policy information respectively corresponding to the at least one piece of second spatial information.

The target spatial information consistent with the plurality pieces of first spatial information is searched in the policy mapping relationship. If all the target spatial information corresponding to the plurality pieces of first spatial information is found, the target policy information respectively corresponding to the plurality pieces of target spatial information that is found is taken as the first policy information corresponding to each piece of first spatial information in the plurality pieces of first spatial information. In this case, the plurality pieces of policy information in step 403 are the first policy information corresponding to each piece of first spatial information in the plurality pieces of first spatial information.

If only the target spatial information corresponding to a part of the first spatial information is found in the plurality pieces of first spatial information, the target policy information respectively corresponding to the found target spatial information is taken as the first policy information corresponding to the part of the first spatial information, respectively.

The first spatial information for which the target spatial information is not found is determined as the second spatial information (that is, the at least one piece of second spatial information that is different from the target spatial information and that exists in the plurality pieces of first spatial information), and then the second policy information corresponding to each piece of second spatial information is determined sequentially. To be specific, the plurality pieces of policy information include the first policy information corresponding to a part of the first spatial information and a plurality pieces of second policy information corresponding to a plurality pieces of second spatial information.

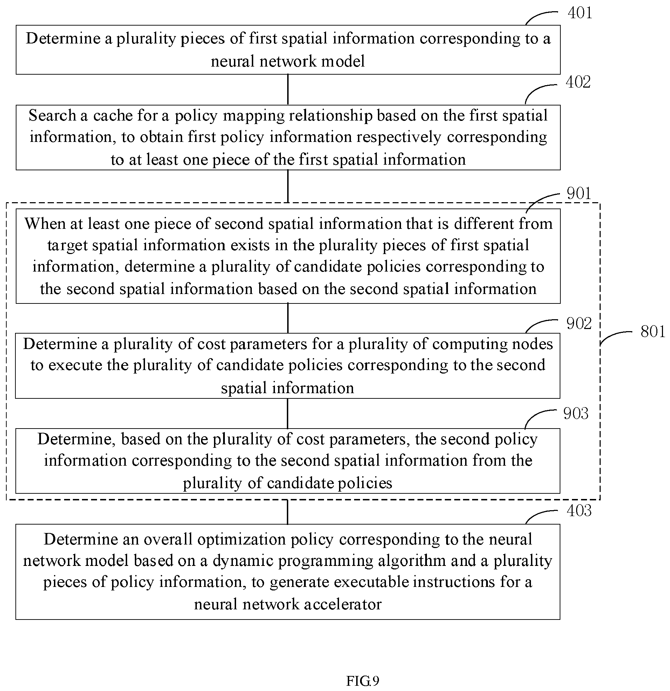

In some embodiments, as shown in FIG 9, on the basis of the embodiment shown in FIG 4, the "determine second policy information respectively corresponding to the at least one piece of second spatial information" in step 801 of "when at least one piece of second spatial information that is different from the target spatial information exists in the plurality pieces of first spatial information, determine second policy information respectively corresponding to the at least one piece of second spatial information" includes steps 901 to 903.

Step 901. Determine a plurality of candidate policies corresponding to the second spatial information based on the second spatial information.

The first spatial information is obtained by encoding the layered spaces. Therefore, the at least one piece of second spatial information in the plurality pieces of first spatial information is also obtained through encoding. It may be learned from step 701 that during the encoding process, a plurality of mapping relationships are stored in the processor. Because the second spatial information is obtained through encoding, the second space corresponding to the second spatial information may be searched in the plurality of mapping relationships. The second space includes at least one neural network layer and data information about the neural network layer. The second space is a part of the plurality of layered spaces.

For detailed content of the data information about the neural network layer, reference may be made to the description in step 401, and details are not described herein again.

Determining the plurality of candidate policies corresponding to the second spatial information specifically refers to determining a plurality of candidate policies corresponding to the neural network layer in the second space. The determining process is to first determine a data size of input data of the neural network layer in the second space based on the data information about the neural network layer in the second space. Subsequently, the plurality of candidate policies are obtained based on the data size of the input data and hardware resources of the neural network accelerator.

Step 902. Determine a plurality of cost parameters for a plurality of computing nodes to execute the plurality of candidate policies corresponding to the second spatial information.

Because one piece of second spatial information may correspond to a plurality of candidate policies, to quickly determine a plurality of cost parameters of a plurality of candidate policies corresponding to at least one piece of second spatial information, the at least one piece of second spatial information may be allocated to a plurality of computing nodes, and the computing nodes are used to determine the plurality of cost parameters of the plurality of candidate policies corresponding to the second spatial information. An allocation rule for allocating the second spatial information to the computing nodes is that computing resources required for processing the plurality of cost parameters of the plurality of candidate policies corresponding to the second spatial information are less than current remaining computing resources of the computing nodes.

Therefore, the neural network compiler may first obtain a load capacity, pending data, and remaining computing resources of each computing node in the processor (such as a CPU). Subsequently, computing resources required for processing the second spatial information are evaluated, and then the remaining computing resources of the computing nodes are compared with the computing resources required for processing the second spatial information, so as to determine the computing nodes for processing the second spatial information. In the process of determining the computing nodes, load balance between various computing nodes may be considered, thereby avoiding overloading a single computing node.

A plurality of candidate policies corresponding to each second space are executed respectively by using a plurality of computing nodes, to obtain a plurality of cost parameters corresponding to each candidate policy. In this way, a processing speed is faster, and less time is spent. The plurality of cost parameters include processing time, consumed computational resources, occupied storage resources, and processing periods.

Step 903. Determine, based on the plurality of cost parameters, the second policy information corresponding to the second spatial information from the plurality of candidate policies.

The second policy information corresponding to the second spatial information is determined from the plurality of candidate policies based on the scenario to which the neural network model is applied and the plurality of cost parameters. For example, the scenario to which the neural network model is applied is real-time vehicle navigation. The plurality of candidate policies corresponding to the second spatial information include a candidate policy 1 and a candidate policy 2. It may be learned from the cost parameter corresponding to the candidate policy 1 that, the candidate policy 1 takes longer time to execute the calculation of the neural network layer corresponding to the second spatial information, but occupies fewer bandwidth resources. It may be learned from the cost parameter corresponding to the candidate policy 2 that, the candidate policy 2 takes shorter time to execute the calculation of the neural network layer corresponding to the second spatial information, but occupies more bandwidth resources. To make sure that a navigation result can be received in a real-time manner while driving, the candidate policy 2 is used as the second policy information in this scenario.

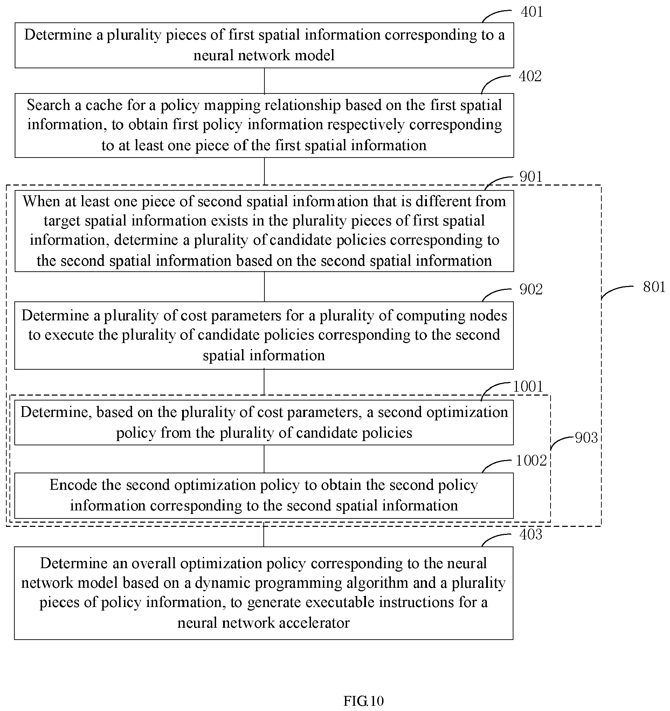

In some embodiments, as shown in FIG 10, on the basis of the embodiment shown in FIG 9, step 903 includes steps 1001 and 1002.

Step 1001. Determine, based on the plurality of cost parameters, a second optimization policy from the plurality of candidate policies.

Step 1002. Encode the second optimization policy to obtain the second policy information corresponding to the second spatial information.

With reference to step 903, the second optimization policy may be determined from the plurality of candidate policies based on the scenario to which the neural network model is applied and the plurality of cost parameters. Subsequently, the second optimization policy is encoded to obtain the second policy information. The second policy information may be represented by using a "value" value. Because there is a large amount of data information in the second optimization policy, a data volume of the second optimization policy may be reduced through encoding. In this way, not only storage pressure is reduced, but computational pressure is also reduced.

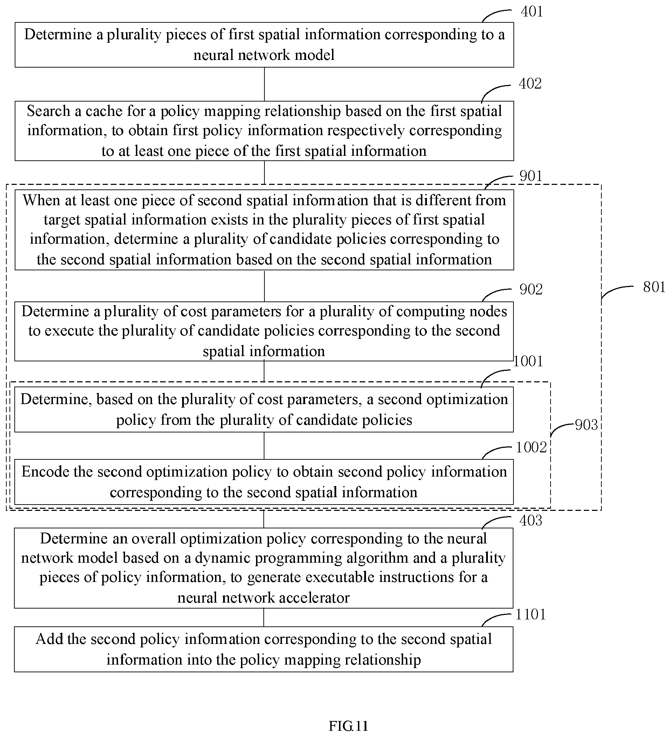

In some embodiments, as shown in FIG 11, on the basis of the embodiment shown in FIG 10, the method further includes step 1101.

Step 1101. Add the second policy information corresponding to the second spatial information into the policy mapping relationship.

It may be learned from step 801 that at least one piece of second spatial information that is different from the target spatial information may exist in the plurality pieces of first spatial information. In this case, after the second policy information corresponding to the second spatial information is determined by using the computing node, the second spatial information and the second policy information corresponding to the second spatial information may be updated into the policy mapping relationship. In this way, a data volume of the policy mapping relationship can be expanded. During next compilation and optimization, the updated policy mapping relationship may be searched, so as to expand a search range, improve a probability of finding the first policy information, and further reduce the duration of compilation and optimization.

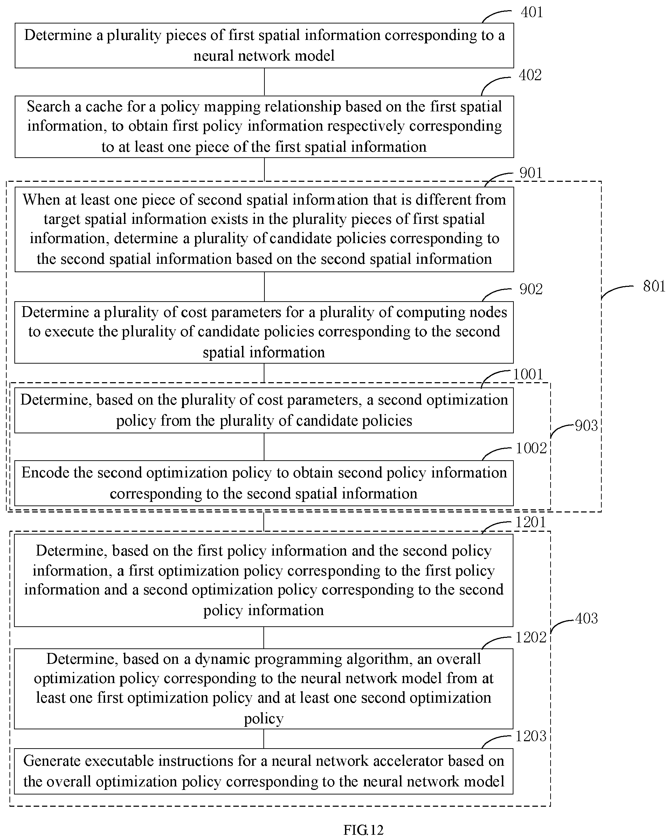

In some embodiments, as shown in FIG 12, on the basis of the embodiment shown in FIG 11, step 403 includes steps 1201 to 1203.

Step 1201. Determine, based on the first policy information and the second policy information, a first optimization policy corresponding to the first policy information and a second optimization policy corresponding to the second policy information.

Because the first policy information and the second policy information are generated after the encoding, the plurality of mapping relationships stored in the processor include the first policy information and the second policy information. When the overall optimization policy corresponding to the neural network model needs to be determined based on the first policy information and the second policy information, the first optimization policy corresponding to the first policy information and the second optimization policy corresponding to the second policy information may be searched first based on a plurality of mapping relationships.

Step 1202. Determine, based on the dynamic programming algorithm, the overall optimization policy corresponding to the neural network model from the at least one first optimization policy and the at least one second optimization policy.

For example, taking the neural network model 50 shown in FIG 5 as an example, it may be learned from table 1 that the neural network model 50 corresponds to 18 layered spaces. The policy mapping relationship is searched, and it is determined that the policy mapping relationship only contains a plurality of layered spaces corresponding to the neural network layers 1 to 3 and first optimization policies respectively corresponding to the plurality of layered spaces. The plurality of layered spaces respectively are the layered space 1, the layered space 2, the layered space 3, the layered space 6, the layered space 7, and the layered space 11. The first optimization policies respectively corresponding to the plurality of layered spaces are: a first optimization policy corresponding to the layered space 1, a first optimization policy corresponding to the layered space 2, a first optimization policy corresponding to the layered space 3, a first optimization policy corresponding to the layered space 6, a first optimization policy corresponding to the layered space 7, and a first optimization policy corresponding to the layered space 11.

Because it is determined that the policy mapping relationship only contains a plurality of layered spaces corresponding to the neural network layers 1 to 3 and the first optimization policies respectively corresponding to the plurality of layered spaces, a plurality of layered spaces related to the neural network layer 4 or the neural network layer 5, and second optimization policies respectively corresponding to the plurality of layered spaces need to be determined again.

For example, the plurality of layered spaces related to the neural network layer 4 or the neural network layer 5, and the second optimization policies respectively corresponding to the plurality of layered spaces may be determined by using steps 901 to 1002. The plurality of layered spaces related to the neural network layer 4 or the neural network layer 5 respectively are: the layered space 4, the layered space 5, the layered space 8, the layered space 9, the layered space 10, the layered space 12, the layered space 13, the layered space 14, the layered space 15, the layered space 16, the layered space 17, and the layered space 18. The second optimization policies respectively corresponding to the plurality of layered spaces related to the neural network layer 4 or the neural network layer 5 are: a second optimization policy corresponding to the layered space 4, a second optimization policy corresponding to the layered space 5, a second optimization policy corresponding to the layered space 8, a second optimization policy corresponding to the layered space 9, a second optimization policy corresponding to the layered space 10, a second optimization policy corresponding to the layered space 12, a second optimization policy corresponding to the layered space 13, a second optimization policy corresponding to the layered space 14, a second optimization policy corresponding to the layered space 15, a second optimization policy corresponding to the layered space 16, a second optimization policy corresponding to the layered space 17, and a second optimization policy corresponding to the layered space 18.

According to the first optimization policy corresponding to the layered space 1, the first optimization policy corresponding to the layered space 2, the first optimization policy corresponding to the layered space 3, the first optimization policy corresponding to the layered space 6, the first optimization policy corresponding to the layered space 7, the first optimization policy corresponding to the layered space 11, the second optimization policy corresponding to the layered space 4, the second optimization policy corresponding to the layered space 5, the second optimization policy corresponding to the layered space 8, the second optimization policy corresponding to the layered space 9, the second optimization policy corresponding to the layered space 10, the second optimization policy corresponding to the layered space 12, the second optimization policy corresponding to the layered space 13, the second optimization policy corresponding to the layered space 14, the second optimization policy corresponding to the layered space 15, the second optimization policy corresponding to the layered space 16, the second optimization policy corresponding to the layered space 17, and the second optimization policy corresponding to the layered space 18, it is determined, based on the dynamic programming algorithm, that the overall optimization policy corresponding to the neural network model 50 is the first optimization policy corresponding to the layered space 11, the second optimization policy corresponding to the layered space 4, and the second optimization policy corresponding to the layered space 5.

Step 1203. Generate the executable instructions for the neural network accelerator based on the overall optimization policy corresponding to the neural network model.

In the embodiments of this disclosure, when generating the executable instructions for the neural network accelerator, the compiler-side device first divides the neural network model into a plurality pieces of first spatial information. Subsequently, the policy mapping relationship is searched for a plurality pieces of first policy information corresponding to the plurality pieces of first spatial information. If not all the plurality pieces of first spatial information are found in the policy mapping relationship, a plurality pieces of second policy information corresponding to the spatial information that is not found (that is, the second spatial information) is determined. Finally, the overall optimization policy corresponding to the neural network model, that is, a compilation and optimization result of the neural network model, is determined by using a plurality pieces of policy information (that is, the first policy information and the second policy information) and the dynamic programming algorithm. Scale of the neural network model is usually very large, and optimization policies (that is, the target policy information) corresponding to some spaces (that is, the target spatial information) may be pre-stored through the policy mapping relationship. In this way, when the first spatial information is the same as the target spatial information, the target policy information corresponding to the target spatial information may be directly used as the first policy information corresponding to the first spatial information, so that the process of determining the first policy information is saved, thereby reducing duration of compilation and optimization for the neural network compiler.

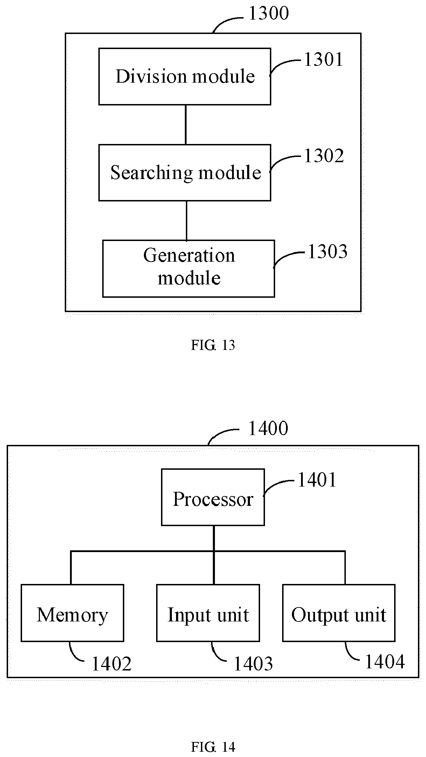

FIG 13 shows an instruction generation apparatus according to an embodiment of this disclosure. As shown in FIG. 13, an instruction generation apparatus 1300 includes a division module 1301, a searching module 1302, and a generation module 1303.

The division module 1301 is configured to determine a plurality pieces of first spatial information corresponding to a neural network model. The first spatial information is used to represent at least one neural network layer in the neural network model.

The searching module 1302 is configured to search a cache for a policy mapping relationship based on the first spatial information, to obtain first policy information respectively corresponding to at least one piece of the first spatial information. The policy mapping relationship includes a plurality pieces of target spatial information and target policy information respectively corresponding to the target spatial information, and the plurality pieces of target spatial information includes the at least one piece of first spatial information.

The generation module 1303 is configured to determine an overall optimization policy corresponding to the neural network model based on a dynamic programming algorithm and a plurality pieces of policy information, to generate executable instructions for the neural network accelerator. The plurality pieces of policy information include the first policy information respectively corresponding to the at least one piece of first spatial information.

In some embodiments, the instruction generation apparatus 1300 further includes a determining module. The determining module is configured to determine second policy information respectively corresponding to the at least one piece of second spatial information when at least one piece of second spatial information that is different from the target spatial information exists in the plurality pieces of first spatial information. The plurality pieces of policy information include the second policy information respectively corresponding to the at least one piece of second spatial information.

In some embodiments, the determining module includes a first determining unit, a second determining unit, and a third determining unit. The first determining unit is configured to determine a plurality of candidate policies corresponding to the second spatial information based on the second spatial information. The second determining unit is configured to determine a plurality of cost parameters for a plurality of computing nodes to execute the plurality of candidate policies corresponding to the second spatial information. The third determining unit is configured to determine, based on the plurality of cost parameters, the second policy information corresponding to the second spatial information from the plurality of candidate policies.

In some embodiments, the third determining unit is further configured to determine, based on the plurality of cost parameters, a second optimization policy from the plurality of candidate policies; and encode the second optimization policy to obtain the second policy information corresponding to the second spatial information.

In some embodiments, the instruction generation apparatus 1300 includes an addition module. The addition module is configured to add the second policy information corresponding to the second spatial information into the policy mapping relationship.

In some embodiments, the division module 1301 is further configured to determine a model parameter of the neural network model, wherein the model parameter includes a quantity of the neural network layers, and/or an input/output type of the neural network layer; obtain, based on the model parameter of the neural network model, a plurality of layered spaces corresponding to the neural network layers in the neural network model; and obtain a plurality pieces of first spatial information based on the plurality of layered spaces.

In some embodiments, the input/output type of the neural network layer includes at least one of single-input single-output, single-input dual-output, and dual-input dual-output. The model parameter is represented by using a directed cyclic graph or a computational instruction sequence.

In some embodiments, the division module 1301 is further configured to obtain the first spatial information by encoding the plurality of layered spaces and hardware resource information of the neural network accelerator.

In some embodiments, the generation module 1303 is further configured to determine, based on the first policy information and the second policy information, a first optimization policy corresponding to the first policy information and a second optimization policy corresponding to the second policy information; determine, based on the dynamic programming algorithm, an optimization policy corresponding to the neural network model from the at least one first optimization policy and the at least one second optimization policy; and generate the executable instructions for the neural network accelerator based on the optimization policy corresponding to the neural network model.

FIG 14 is a diagram of a structure of an electronic device according to an embodiment of this disclosure. As shown in FIG 14, an electronic device 1400 includes one or more processors 1401 and a memory 1402.

The processor 1401 may be a central processing unit (CPU) or other forms of processing units having a data processing capability and/or an instruction execution capability, and may control another component in the electronic device 1400 to perform a desired function.

The memory 1402 can include one or more computer program products. The computer program product can include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1401 may execute the program instruction to implement the instruction generation method according to various embodiments of this disclosure that are described above and/or other desired functions.

In an example, the electronic device 1400 may further include an input unit 1403 and an output unit 1404. These components are connected to each other through a bus system and/or another form of connection mechanism (not shown).

Certainly, for simplicity, FIG 14 shows only some of components in the electronic device 1400 that are related to this disclosure, and components such as a bus and an input/output interface are omitted. In addition, according to specific application situations, the electronic device 1400 may further include any other appropriate components.

In addition to the foregoing method and device, the embodiments of this disclosure may also relate to a computer program product, which includes computer program instructions. When the computer program instructions are run by a processor, the processor is enabled to perform the steps, of the instruction generation method according to the embodiments of this disclosure, that are described in the "exemplary method" part of this specification.

The computer program product may be program codes, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program codes may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions When the computer program instructions are run by the processor, the processor is enabled to perform the steps, of the instruction generation method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The foregoing descriptions are given for illustration and description. In addition, the description is not intended to limit the embodiments of this disclosure to forms disclosed herein. Although a plurality of exemplary aspects and embodiments have been discussed above, a person skilled in the art may recognize certain variations, modifications, changes, additions, and sub-combinations thereof.

## Claims

1. An instruction generation method for a neural network accelerator, **characterized in** comprising:
determining (step 401) a plurality pieces of first spatial information corresponding to a neural network model, wherein the first spatial information is used to represent at least one neural network layer in the neural network model;
searching (step 402) a cache for a policy mapping relationship based on the first spatial information, to obtain first policy information respectively corresponding to at least one piece of the first spatial information, wherein the policy mapping relationship comprises a plurality pieces of target spatial information and target policy information respectively corresponding to the target spatial information, and the plurality pieces of target spatial information comprises the at least one piece of first spatial information; and
determining (step 403) an overall optimization policy corresponding to the neural network model based on a dynamic programming algorithm and a plurality pieces of policy information, to generate executable instructions for the neural network accelerator, wherein the plurality pieces of policy information comprises the first policy information respectively corresponding to the at least one piece of first spatial information.

2. The method according to claim 1, further comprising:
in a case where at least one piece of second spatial information that is different from the target spatial information exists in the plurality pieces of first spatial information, determining (step 801) second policy information respectively corresponding to the at least one piece of second spatial information, wherein the plurality pieces of policy information comprise the second policy information respectively corresponding to the at least one piece of second spatial information.

3. The method according to claim 2, wherein the determining (step 801) second policy information respectively corresponding to the at least one piece of second spatial information comprises:
determining (step 901) a plurality of candidate policies corresponding to the second spatial information based on the second spatial information;
determining (step 902) a plurality of cost parameters for a plurality of computing nodes to execute the plurality of candidate policies corresponding to the second spatial information; and
determining (step 903), based on the plurality of cost parameters, the second policy information corresponding to the second spatial information from the plurality of candidate policies.

4. The method according to claim 3, wherein the determining (step 903), based on the plurality of cost parameters, the second policy information corresponding to the second spatial information from the plurality of candidate policies comprises:
determining (step 1001), based on the plurality of cost parameters, a second optimization policy from the plurality of candidate policies; and
encoding (step 1002) the second optimization policy to obtain the second policy information corresponding to the second spatial information.

5. The method according to any one of claims 2 to 4, wherein the method further comprises:
adding (step 1101) the second policy information corresponding to the second spatial information into the policy mapping relationship.

6. The method according to any one of claims 1 to 4, wherein the determining (step 401) a plurality pieces of first spatial information corresponding to a neural network model comprises:
determining (step 601) a model parameter of the neural network model, wherein the model parameter comprises a quantity of neural network layers, and/or an input/output type of the neural network layer;
obtaining (step 602), based on the model parameter of the neural network model, a plurality of layered spaces corresponding to the neural network layers in the neural network model; and
obtaining (step 603) the plurality pieces of first spatial information based on the plurality of layered spaces.

7. The method according to claim 6, wherein the input/output type of the neural network layer comprises at least one of single-input single-output, single-input dual-output, and dual-input dual-output; and the model parameter is represented by using a directed cyclic graph or a computational instruction sequence.

8. The method according to claim 6, wherein the obtaining (step 603) the plurality pieces of first spatial information based on the plurality of layered spaces comprises:
obtaining (step 701) the plurality pieces of first spatial information by encoding the plurality of layered spaces and hardware resource information of the neural network accelerator.

9. The method according to any one of claims 2 to 4, wherein the determining (step 403) an overall optimization policy corresponding to the neural network model based on a dynamic programming algorithm and a plurality pieces of policy information, to generate executable instructions for the neural network accelerator comprises:
determining (step 1201), based on the first policy information and the second policy information, a first optimization policy corresponding to the first policy information and a second optimization policy corresponding to the second policy information;
determining (step 1202), based on the dynamic programming algorithm, the overall optimization policy corresponding to the neural network model from the at least one first optimization policy and the at least one second optimization policy; and
generating (step 1203) the executable instructions for the neural network accelerator based on the overall optimization policy corresponding to the neural network model.

10. An instruction generation apparatus for a neural network accelerator, **characterized in** comprising:
a division module (1301), configured to determine a plurality pieces of first spatial information corresponding to a neural network model, wherein the first spatial information is used to represent at least one neural network layer in the neural network model;
a searching module (1302), configured to search a cache for a policy mapping relationship based on the first spatial information, to obtain first policy information respectively corresponding to at least one piece of the first spatial information, wherein the policy mapping relationship comprises a plurality pieces of target spatial information and target policy information respectively corresponding to the target spatial information, and the plurality pieces of target spatial information comprises the at least one piece of first spatial information; and
a generation module (1303), configured to determine an overall optimization policy corresponding to the neural network model based on a dynamic programming algorithm and a plurality pieces of policy information, to generate executable instructions for the neural network accelerator, wherein the plurality pieces of policy information comprise the first policy information respectively corresponding to the at least one piece of first spatial information.

11. The instruction generation apparatus according to claim 10, further comprising a determining module which is configured to determine second policy information respectively corresponding to the at least one piece of second spatial information when at least one piece of second spatial information that is different from the target spatial information exists in the plurality pieces of first spatial information, wherein the plurality pieces of policy information include the second policy information respectively corresponding to the at least one piece of second spatial information.

12. The instruction generation apparatus according to claim 11, wherein the determining module includes a first determining unit, a second determining unit, and a third determining unit, wherein the first determining unit is configured to determine a plurality of candidate policies corresponding to the second spatial information based on the second spatial information; the second determining unit is configured to determine a plurality of cost parameters for a plurality of computing nodes to execute the plurality of candidate policies corresponding to the second spatial information; and the third determining unit is configured to determine, based on the plurality of cost parameters, the second policy information corresponding to the second spatial information from the plurality of candidate policies.

13. The instruction generation apparatus according to claim 10, further comprising an addition module, which is configured to add the second policy information corresponding to the second spatial information into the policy mapping relationship.

14. A computer readable storage medium, **characterized in that** the storage medium stores a computer program, and the computer program is used for implementing the instruction generation method for a neural network accelerator according to any one of claims 1 to 9.

15. An electronic device (1400), **characterized in that** the electronic device comprises:
a processor (1401); and
a memory (1402), configured to store processor-executable instructions, wherein
the processor (1401) is configured to read the executable instructions from the memory (1402), and execute the instructions to implement the instruction generation method for a neural network accelerator according to any one of claims 1 to 9.
